# EUROPÄISCHE PATENTSCHRIFT

(11) **EP 1 614 585 B1**
(45) Veröffentlichungstag und Bekanntmachung des Hinweises auf die Patenterteilung: **09.07.2008**
(21) Anmeldenummer: 05104423.8
(22) Anmeldetag: 24.05.2005
(51) Int. Cl.: B60Q 1/48

(54) **Verfahren und Vorrichtung zum Vermessen einer Parklücke für ein Einparkassistenzsystem eines Kraftfahrzeugs**
Method and device to measure a parking space for a motor vehicle parking assistance system
Méthode et dispositif de mesure d'un emplacement de stationnement pour un système d'assistance au stationnement d'un véhicule automobile

(30) Priorität: 08.07.2004 DE 102004033078
(43) Veröffentlichungstag der Anmeldung: 11.01.2006
(73) Patentinhaber: ROBERT BOSCH GMBH, 70442 Stuttgart (DE)
(72) Erfinder: Danz, Christian, 70469 Stuttgart (DE); Seiter, Michael, 71272 Renningen (DE); Faber, Petko, 71229 Leonberg (DE)

(56) Entgegenhaltungen:
- WO-A-03/070517
- WO-A-03/087874
- WO-A-20/05024463
- DE-A1- 10 146 712
- DE-A1- 10 252 426

## Beschreibung

### STAND DER TECHNIK

Die vorliegende Erfindung betrifft ein Verfahren und eine Vorrichtung zum Vermessen einer Parklücke für ein Einparkassistenzsystem eines Kraftfahrzeugs.

Der Verkehrsraum und die zur Verfügung stehenden Parkflächen werden zunehmend geringer, insbesondere in Ballungszentren. Die Suche nach einer geeigneten Parklücke belastet den Fahrer zusätzlich zum immer mehr zunehmenden Verkehr. Hier kann eine Funktion zur Parklückenvermessung (PLV) den Fahrer bei der Suche nach einer ausreichend großen Parklücke unterstützen. Dabei hilft dann ein so genannter Semiautonomer Einparkassistent (SPA = Semiautonomous Parking Assistent) oder Einparkassistenzsystem zügig in die gefundene Parklücke einzufahren. Somit werden lange oder erfolglose Einparkvorgänge vermeidbar.

Das Einparkassistenzsystem berechnet nach Ermittlung einer passenden Parklücke in Abhängigkeit von deren vermessener Länge eine optimale Einfahrbahn. Mittels geeigneter Anzeigeeinrichtungen (optisch, akustisch, haptisch, und dergleichen) wird dem Fahrer die Information übermittelt, wie er zu lenken, beschleunigen und bremsen hat, um optimal in die Parklücke einzufahren. Die Abweichungen von einer so genannten Solltrajektorie werden vom Fahrer selbst oder automatisch abgeglichen. Die Längsbewegung wird vom Fahrer bestimmt. Das Lenken kann auch automatisch ausgeführt werden, wobei der Fahrer das Fahrzeug nur noch beschleunigt und abbremst.

Die DE 298 04 296 U1 offenbart eine Einparkhilfe mittels Ultraschallverfahren zum Einparken neben einem Bordstein und warnt vor Berührung des Bordsteins. Die zugehörigen Abstandssensoren sind seitlich am Fahrzeug in der Nähe der Räder angebracht. Der Fahrer wird informiert, wenn die Abstandssensoren auf einer Seite beide gleichen Abstand zum Bordstein haben. Die Größe des Bordsteins kann ermittelt werden.

Patent Abstracts of Japan 2000 - 346936 beschreibt eine Einrichtung zur Objekterfassung, wobei Boden und Bordstein eines Abtastbereiches erkannt aber aus diesem Bereich ausgeklammert werden. Die Einrichtung besteht aus einem Abstandssensor mit horizontalem Abtastbereich und einem Verstellungssensor, der die Höhenlage des Fahrzeugs abtastet. Die Lage des Fahrzeugs wird mit einem Rechner bestimmt, auch der Reifendruck wird mit einbezogen. Wenn der Abstandssensor den Boden erfasst, wird seine Verstärkung reduziert. Der Abtastbereich wird nicht durch Boden- oder Bordsteinechos gestört.

Aus der DE 10146 712 A1 ist eine Einparkhilfsvorrichtung für Kraftfahrzeuge bekannt, die zwei Sensoren aufweist. Durch die beiden Sensoren wird ein Sendesignal aus zwei Teilstrahlen gebildet, die eine annähernd flächenförmige Abstrahlcharakteristik besitzen, wobei die beiden Flächen zumindest annähernd senkrecht zueinander stehen.

Aus der nachveröffentlichten europäischen Patentanmeldung EP 047 66532.8, veröffentlich als WO 2005/024463 ist eine Vorrichtung zur Bestimmung von Größe und Position einer Parklücke in Relation zur Position eines Fahrzeugs während einer Vorbeifahrt des Fahrzeugs an der Parklücke bekannt, wobei die Parklücke eine Ausdehnung längs zur Fahrbahn und eine Ausdehnung quer zur Fahrbahn aufweist. Die Breite der Parklücke wird mittels eines ersten Ultraschallsensors mit einer ersten Empfindlichkeit und die Tiefe der Parklücke mittels eines zweiten Ultraschallsensors mit einer zweiten Empfindlichkeit bestimmt. Die Ultraschallsensoren sind hierzu beabstandet zueinander am Fahrzeug angeordnet.

Ein weiteres Verfahren verwendet einen seitlichen Abstandssensor auf Ultraschallbasis, der beim Vorbeifahren an parkenden Fahrzeugen, die eine Parklücke begrenzen, mit einer konstanten Abtastrate die Grenzen der Parklücke erfasst, wobei die Entfernung zwischen diesen Grenzen bestimmt wird. Hierbei wird die höchst mögliche Abtastrate unabhängig von der Eigengeschwindigkeit des Fahrzeugs benutzt. Die Messreichweite der Ultraschallsensoren hängt jedoch unter anderem von der Schallgeschwindigkeit ab. Erhöht man die Abtastzeit, sinkt die Abtastrate. Das wiederum kann dazu führen, dass die Genauigkeit der Parklückenvermessung sinkt. Ultraschallbasierte Systeme sind sehr bekannt und vergleichsweise preiswert.

### VORTEILE DER ERFINDUNG

Das erfindungsgemäße Verfahren zum Vermessen einer Parklücke für ein Einparkassistenzsystem eines Kraftfahrzeugs mit den Merkmalen des Anspruchs 1 ermöglicht es, die erforderliche Länge und Tiefe einer möglichen Parklücke einfach, genau und unabhängig von der Vorbeifahrgeschwindigkeit zu erfassen. Das hat den Vorteil, dass im Vorgang des Vorbeifahrens die Grenzen der Parklücke, und somit deren Länge, und gleichzeitig die Tiefe der Parklücke mit hoher Genauigkeit auch hoher Vorbeifahrgeschwindigkeit bis zu 30 km/h und hoher Erfassungstiefe der Parklücke (bis zu 4...5 m) gemessen werden.

Die Grundidee der Erfindung wird im Folgenden erläutert. Es werden zwei Messmodi für die Parklückenvermessung vorgeschlagen. Im ersten Modus wird der Abstandssensor beim Passieren des ersten parkenden Fahrzeugs vor der Parklücke mit einer hohen Abtastrate mit hoher Genauigkeit betrieben. Erfasst der Abstandssensor die Parklücke, das heißt es werden keine Objekte mehr bis zu einem Bereich von beispielsweise bis zu 2 m erfasst, so wird der zweite Modus mit einer niedrigen Abtastrate ausgeführt. Hierbei wird eine Reichweite von 4 bis 5 m erzielt, mit der die Tiefe der Parklücke und auch der Bordstein detektiert werden kann. Nur mit Hilfe dieser Informationen kann eine zufriedenstellende Bahnplanung von dem Einparkassistenzsystem durchgeführt werden. Wird das zweite Fahrzeug bzw. Hindernis erfasst, das die Parklücke an ihrem Ende begrenzt, wird wieder in den ersten Modus mit hoher Abtastrate umgeschaltet, um die zweite Begrenzung zur Längenvermessung exakt zu erfassen.

Kern der Erfindung ist die Verwendung von zwei unterschiedlichen Abtastraten, mit denen entweder ein Abstandssensor nacheinander in Abhängigkeit von seiner Position zu einer Parklücke und deren Begrenzungen betrieben wird.

Ein wesentlicher Vorteil der Erfindung ist, dass der Benutzer mit konstant hoher Geschwindigkeit an der Parklücke vorbeifahren kann und trotzdem eine vollständige Erfassung des freien Parklückenraumes und eine genaue Begrenzungseckenlokalisierung durchgeführt werden kann.

Ein weiterer Vorteil besteht darin, dass mit dem erfindungsgemäßen Verfahren nunmehr nicht nur Längsparklücken sondern auch Querparklücken vermessen werden können. Dieses ist besonders in den Ländern von großem Vorteil, in denen Querparklücken in besonders großer Zahl vorhanden sind.

Das erfindungsgemäße Verfahren zum Vermessen einer Parklücke für ein Einparkassistenzsystem eines Kraftfahrzeugs mit mindestens einem Abstandssensor und einer Steuereinrichtung weist folgende Verfahrensschritte auf:
(S1) Abtasten einer ersten Eckenbegrenzung mit dem Abstandssensor mit einer ersten Abtastrate zur Ermittlung des Anfangs einer Parklücke;
(S2) Messen der Länge der Parklücke ;
(S3) Messen der Tiefe der Parklücke mit dem Abstandssensor mit einer zweiten Abtastrate;
(S4) Abtasten einer zweiten Eckenbegrenzung als Ende der Parklücke mit dem Abstandssensor;
(S5) Beenden des Messens der Länge und der Tiefe der Parklücke; und
(S6) Übergabe der Vermessungswerte für die Länge und Tiefe der Parklücke an das Einparkassistenzsystem.

Der Verfahrensschritt (S2) Messen der Länge weist die folgenden Teilschritte auf:
(S2a) Betreiben des Abstandssensors mit der ersten Abtastrate;
(S2b) Beenden des Verfahrensschritts (S2) bei Abtasten eines Objektes innerhalb eines vorgebbaren Bereiches und Verzweigen zu Verfahrensschritt (S1); oder
(S2c) Verzweigen zu Verfahrensschritt (S3) bei Überschreiten des vorgebbaren Bereiches, ohne dass ein Objekt abgetastet wurde.

Hierdurch wird bei einem vorher nicht sichtbaren Objekt innerhalb der Parklücke diese als nicht verwendbar erkannt, wobei der Fahrer sofort darüber informiert wird und Zeit spart.

Beim Verfahrensschritt (S4) Abtasten einer zweiten Eckenbegrenzung wird der Abstandssensor wieder mit der ersten Abtastrate betrieben. Dadurch ist es in einfacher Weise möglich, auch die zweite Eckenbegrenzung mit hoher Genauigkeit zu erfassen.

Das Messen der Länge der Parklücke erfolgt mit einer Einrichtung zum Messen des Fahrwegs des Kraftfahrzeugs, welche im Kraftfahrzeug vorhandene Sensoren und/oder Messwerte verwendet, oder mit einem Sensor ausgerüstet ist, der Messwerte für den Fahrweg des Kraftfahrzeugs liefert. Somit werden zur Ermittlung der Länge bereits vorhandene Einrichtungen und Messwerte im Fahrzeug zusätzlich vorteilhaft benutzt.

Die erste und zweite Abtastrate wird von einer Einrichtung zum Erzeugen von Abtastraten erzeugt. Hiermit bietet sich zusätzlich der Vorteil, dass diese Einrichtung individuell eingestellt werden kann, um eine hohe Anpassung an unterschiedliche Gegebenheiten zur erzielen.

Die erste Abtastrate ist höher als die zweite Abtastrate, und ein dazugehöriger erster Abtastbereich weist eine kleinere Reichweite auf als ein zu der zweiten Abtastrate zugehöriger zweiter Abtastbereich. Durch die unterschiedlichen Abtastraten mit ihren korrespondieren Reichweiten kann die Vermessung der Parklücke besonders einfach und genau erfolgen.

Eine Vorrichtung zum Vermessen einer Parklücke für ein
Einparkassistenzsystem eines Kraftfahrzeugs umfasst
- mindestens einen Abstandssensor;
- eine Steuereinrichtung für Abstandssensoren und ihre Signalauswertung;
- eine Einrichtung zum Messen des Fahrwegs des Kraftfahrzeugs; und
- eine Einrichtung zum Erzeugen von Abtastraten für Abstandssensoren.

In einer weiteren Ausgestaltung weist die Vorrichtung mindestens einen ersten und mindesten einen zweiten Abstandssensor auf. In dieser Ausgestaltung können beide Abstandssensoren unabhängig voneinander mit unterschiedlichen Abtastraten in einfacher Weise betrieben werden.

Dabei ist es von besonderem Vorteil, dass die Steuereinrichtung einen Multiplexer aufweist, mit welchem der erste und der zweite Abstandssensor gleichzeitig steuerbar ausgebildet sind. Somit lässt sich ein gleichzeitiger Betrieb Senden/Empfangen der beiden Sensoren mit jeweils unterschiedlicher Abtastrate einfach ermöglichen.

In einer Ausgestaltung ist der erste Abstandssensor im vorderen Abschnitt und der zweite Abstandssensor im hinteren Abschnitt des Kraftfahrzeugs oder umgekehrt angeordnet. Somit können bestehende eingebaute Abstandssensoren einfach verwendet werden bzw. für die Vermessung einer Parklücke benutzt werden.

Die Vorrichtung wird vorteilhaft in einem Fahrzeug separat oder besonders vorteilhaft als Bestandteil bzw. Aufrüstung einer schon vorhandenen Steuereinrichtung installiert, wodurch sich eine Raumersparnis ergibt.

Vorteilhafte Ausgestaltungen und Weiterbildungen der Erfindung sind den Unteransprüchen und der Beschreibung unter Bezugnahme auf die Zeichnungen entnehmbar.

### ZEICHNUNGEN

Die Erfindung wird nachfolgend anhand des in der Figur der Zeichnung angegebenen Ausführungsbeispiels näher erläutert.

### Es zeigt dabei:

FIG. 1 eine schematische Darstellung einer Einparksituation mit einem Verfahren nach dem Stand der Technik;
FIG. 2 eine schematische Darstellung von Abstandssensoren an einem Kraftfahrzeug;
FIG. 3 eine schematische Darstellung einer Einparksituation an einer Längsparklücke mit einer beispielhaften Ausführungsform des erfindungsgemäßen Verfahrens;
FIG. 4 eine schematische Darstellung einer Einparksituation an einer Querparklücke mit der Ausführungsform des erfindungsgemäßen Verfahrens;
FIG. 5 ein Blockdiagramm einer beispielhaften Ausführungsform der erfindungsgemäßen Vorrichtung.

### BESCHREIBUNG DER AUSFÜHRUNGSBEISPIELE

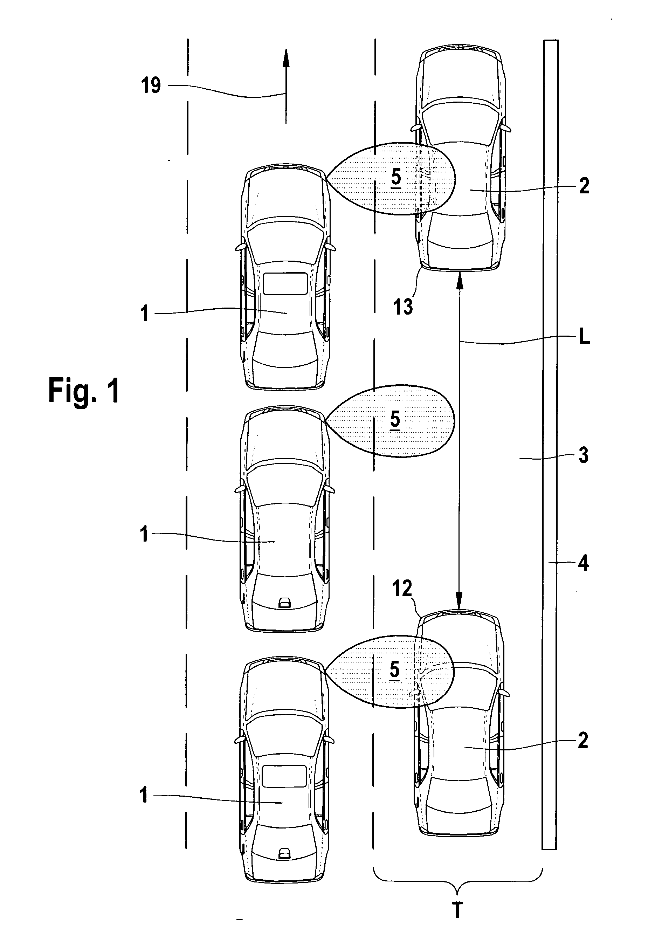

In Figur 1 ist eine schematische Darstellung einer Einparksituation mit einem Verfahren nach dem Stand der Technik gezeigt. Ein Fahrzeug als Vorbeifahrer 1 fährt auf der Fahrbahn einer Straße in Fahrtrichtung 19, die durch einen Pfeil gekennzeichnet ist, an parkenden Fahrzeugen 2 auf einem Parkstreifen vorbei, zwischen welchen sich eine Parklücke 3 befindet. Die Parklücke 3 hat eine Länge L, die durch einen beidseitigen Pfeil bezeichnet ist, und erstreckt sich zwischen der Vorderseite und Rückseite von zwei parkenden Fahrzeugen 2, von denen eines in Fahrtrichtung 19 vor und ein weiteres hinter der Parklücke 3 steht. Eine Tiefe T der Parklücke 3 erstreckt sich von dem Bordstein 4 der Straße quer zu dieser über den Parkstreifen bis zur Fahrbahn. Am Vorbeifahrer 1 ist an der rechten Seite im vorderen Abschnitt dieses Fahrzeugs ein Abstandssensor angeordnet, welcher einen Abtastbereich 5 abtastet. Vor der Parklücke 3 erfasst der Abtastbereich 5 das parkende Fahrzeug 2, im Bereich der Parklücke 3 kein Objekt und am Ende der Parklücke 3 ein weiteres parkendes Fahrzeug 2.

Für ein im Vorbeifahrer 1 angeordnetes Einparkassistenzsystem, welches auch mit Wegsignalgeber und Lenkwinkelsensor ausgerüstet sein kann, ist die Vermessung der Parklücke 3 erforderlich, damit das Assistenzsystem eine zufriedenstellende Bahnplanung zum Einfahren in die Parklücke 3 ermitteln kann. Dazu ist es notwendig, eine erste Eckbegrenzung 12 und eine zweite Eckbegrenzung 13 der Parklücke 3 genau festzustellen. Die erste Eckbegrenzung 12 ist die vordere linke Ecke des in Fahrtrichtung 19 vor der Parklücke 3 parkenden Fahrzeugs 2 und die zweite Eckbegrenzung 13 ist die hintere linke Ecke des in Fahrtrichtung 19 hinter der Parklücke 3 parkenden Fahrzeugs 2. Bei Verkehrssystemen mit Linksverkehr gelten die umgekehrten Seitenbezeichnungen.

Die hierzu eingesetzten Abstandssensoren sind im vorliegenden Beispiel Ultraschallsensoren, die einen Schallimpuls aussenden und das von ihm an einem Objekt reflektierte Echo auswerten, wobei die Laufzeit des Echos ein Maß für den Abstand des Objektes zum Abstandssensor bzw. zum Fahrzeug ist, an dem der Abstandssensor angebracht ist. Diese sogenannten Echoverfahren zur Abstandsbestimmung sind bekannt und sollen nicht weiter erläutert werden.

Die Ermittlung der Länge L der Parklücke 3 wird durchgeführt, indem die Entfernung nach dem Abtasten der ersten Eckbegrenzung 12 bis zum Abtasten der zweiten Eckbegrenzung 13 gemessen wird. Dieses kann auf unterschiedliche Weise erfolgen, zum Beispiel mittels eines im Wagen schon vorhandenen Fahrtstreckenzählers. Es ist hierbei erforderlich, dass die Abtastrate der verwendeten Abstandssensoren während der Vorbeifahrt an der Parklücke 3 konstant beibehalten wird. Somit ist die Reichweite des Abtastbereichs 5 zu gering, um gleichzeitig die Tiefe T der Parklücke 3 und auch die Lage des Bordsteins 4 zu erfassen.

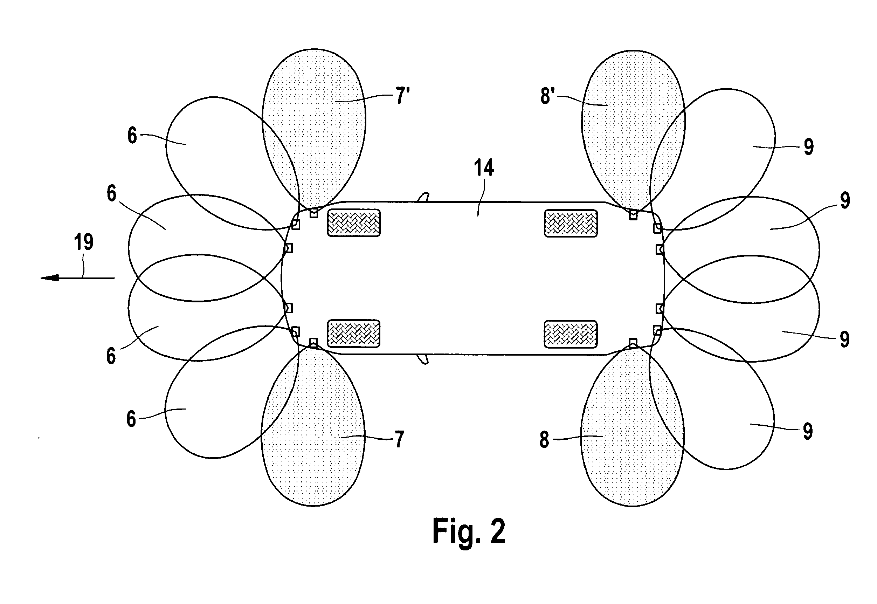

Die Abstandssensoren sind an einem Fahrzeug 14 im vorderen Bereich und im hinteren Bereich angeordnet, wie Figur 2 veranschaulicht. Es sind je Bereich sechs Sensoren üblich, die jeweils vordere Abtastbereiche 6, vordere seitliche Abtastbereiche 7, 7', hintere seitliche Abtastbereiche 8, 8' und hintere Abtastbereiche 9 um das Fahrzeug 14 herum abdecken. Für das Vermessen der Parklücke 3 sind hierbei die Sensoren für die jeweiligen vorderen und/oder hinteren seitlichen Bereiche 7, 7', 8, 8' von Bedeutung.

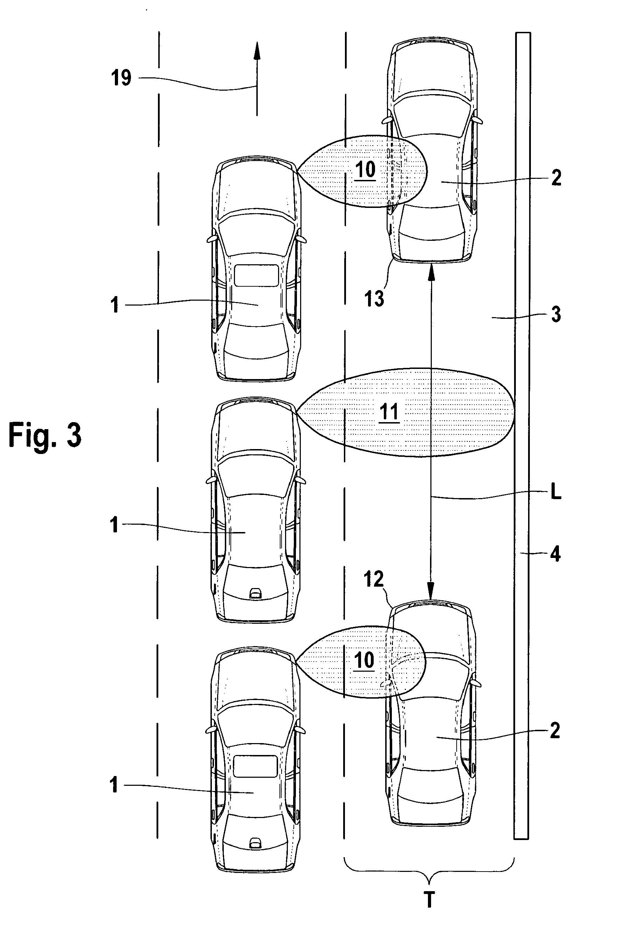

Eine schematische Darstellung einer Einparksituation an einer Parklücke 3 mit einer Ausführungsform des erfindungsgemäßen Verfahrens stellt Figur 3 dar. Der Vorbeifahrer 1 schaltet die in diesem Fahrzeug vorhandene Einparkhilfe ein, wobei zunächst der vordere rechte Abstandssensor mit einem ersten Abtastbereich 10 das in Fahrtrichtung 19 vor der Parklücke 3 parkende Fahrzeug 2 in einem ersten Verfahrensschritt S1 erfasst. Beim Weiterfahren des Vorbeifahrers 1 mit einer geringen Geschwindigkeit ermittelt dieser Sensor mit einer ersten Abtastrate und einem relativ kurzen Abtastweg, aber hoher Genauigkeit, die erste Eckbegrenzung 12.

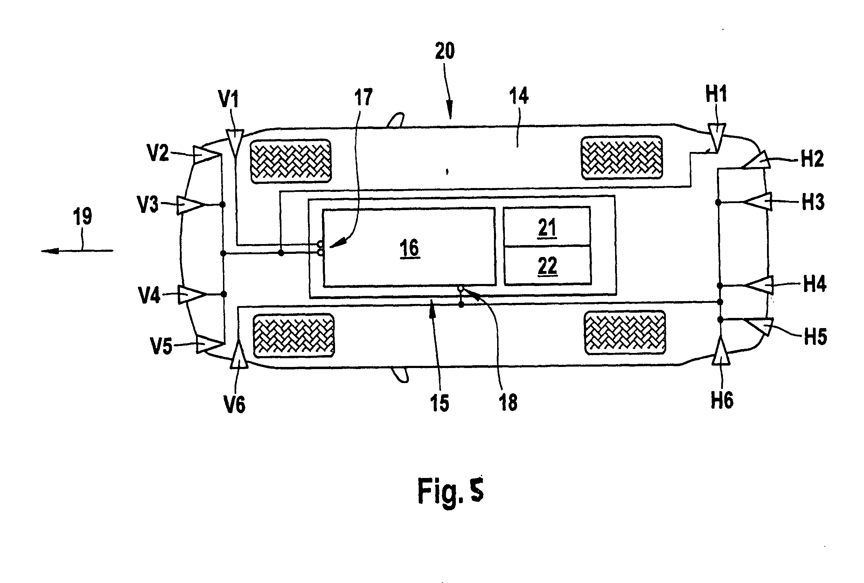

Es ist nun zu erwarten, dass der darauffolgende Bereich ein freie Parklücke 3 ist. Dabei wird zu Beginn des folgenden Verfahrensschritts S2 eine Einrichtung 21 (siehe Figur 5) zum Messen der Länge L der Parklücke 3 gestartet. Wird nun innerhalb eines vorgebbaren Bereichs in Fahrtrichtung 19, zum Beispiel in der Länge von 2 m, doch ein beispielsweise vorher nicht sichtbares Objekt erfasst, so wird der Verfahrensschritt S2 abgebrochen und dem Fahrer ein entsprechendes Signal vom Einparkassistenzsystem gegeben, dass eine neue Parklücke 3 gesucht werden muss.

In dem Fall, in welchem in dem vorgebbaren Bereich kein Objekt erfasst wird, wird bei Überschreiten dieses vorgebbaren Bereichs der Abstandssensor mit einer zweiten Abtastrate betrieben, welche eine größere Reichweite als die erste Abtastrate aufweist, beispielsweise 4 bis 5 m.

Mit dieser zweiten Abtastrate erfolgt im Verfahrensschritt S3 das Messen der Tiefe T der Parklücke 3, wobei der Bordstein 4 und seine Position ermittelt wird. Ist der Bordstein 4 sehr flach ausgebildet, so ist seine Erfassung nicht zwingend notwendig, da ein Überfahren keine Gefahren darstellt. Ist der Bordstein 4 jedoch als eine Wand ausgebildet, so kann dieses ebenfalls erfasst werden, denn diese Information ist für das Erstellen einer Einfahrbahn wichtig, da ein Überqueren dieser "Grenze" mit einem Teil des Fahrzeugs zu Schäden führen kann.

Am Ende der Parklücke 3 ermittelt der zu diesem Zeitpunkt noch mit der zweiten Abtastrate betriebene Abstandssensor das in Fahrtrichtung 19 hinter der Parklücke 3 parkende Fahrzeug 2 im folgenden Verfahrensschritt S4. Zur exakten Ermittlung der zweiten Eckbegrenzung 13 wird der Abstandssensor dann wieder mit der ersten Abtastrate beaufschlagt und beendet im darauf folgenden Verfahrensschritt S5 das Messen der Länge L und der Tiefe T der Parklücke 3.

In einem Verfahrensschritt S6 erfolgt dann eine Übergabe der ermittelten Länge L und Tiefe T der Parklücke 3 an das Einparkassistenzsystem beispielsweise in bekannter Art in Form von Datenworten, wodurch das Einparkassistenzsystem in der Lage ist, eine an die vermessene Parklücke 3 vorteilhaft genau angepasste Bahnplanung zum Einparken dem Fahrer zur Verfügung zu stellen.

Das Messen der Tiefe T der Parklücke 3 erfolgt in bekannter Weise mit einer Abstandsmessung, wobei das Messen der Länge L der Parklücke 3 mittels einer Einrichtung 21 zum Messen des Verfahrweges des Kraftfahrzeugs 14 durchgeführt wird (siehe Figur 5). Dieses kann beispielsweise ein vom internen System des Kraftfahrzeugs 14 bereitgestellter oder gemessener Wert sein, der zum Beispiel auf dem so genannten CAN-Bus im Fahrzeug verfügbar ist. Dieser Längenwert wird durch das Starten und Beenden des Messens in den Verfahrensschritten S2 und S5 in bekannter Weise bestimmt, die nicht weiter erläutert wird. Die unterschiedlichen Abtastraten des Abstandssensors für den ersten Abtastbereich 10 und den zweiten Abtastbereich 11 werden in einer Einrichtung 22 zur Erzeugung von Abtastraten generiert (siehe Figur 5), die sich beispielsweise in einer Steuereinrichtung 15 für die Abstandssensoren befindet. Die Steuereinrichtung 15 ist so ausgebildet, dass sie beispielsweise durch bestimmte vorgebbare Schwellwerte im Vergleich mit den von den Abstandssensoren gelieferten Signalen das jeweilige Einschalten bzw. Umschalten der zugehörigen Abtastrate für den Abstandssensor durchführt. Dieses kann in einer anderen Ausgestaltungsform auch von der Einrichtung 22 zur Erzeugung von Abtastraten ausgeführt werden.

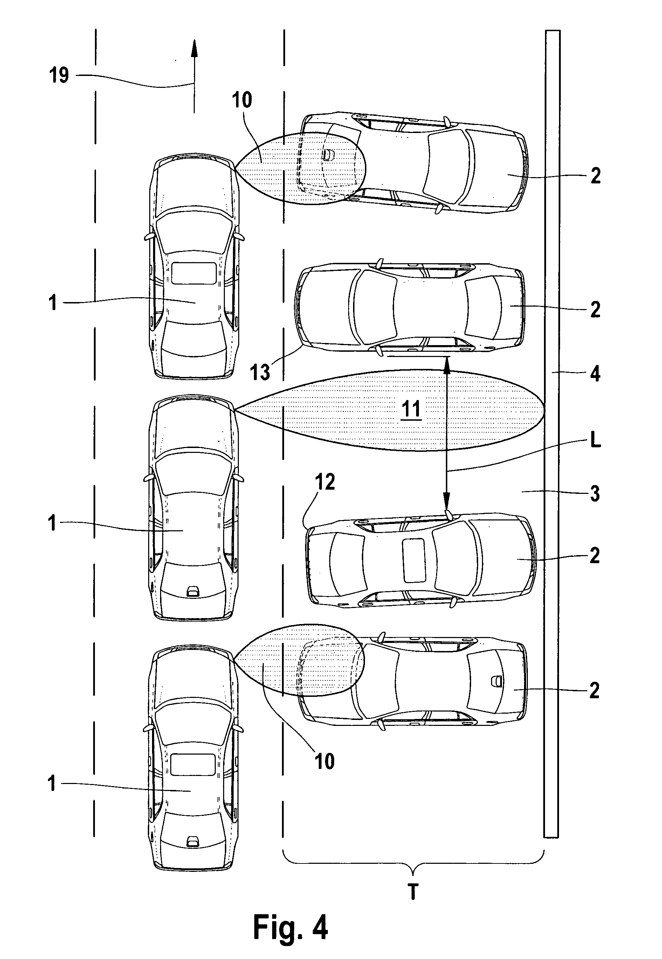

Figur 4 zeigt die Verwendung den oben beschriebenen erfindungsgemäßen Verfahrens bei einer quer zur Fahrbahn verlaufenden Parklücke 3, wobei besonders der zweite Abtastbereich 11 mit der zweiten Abtastraten mit einer Reichweite von ca. 4 bis 5 m vorteilhaft anzuwenden ist.

Die Figur 5 zeigt ein Blockdiagramm einer beispielhaften Ausführungsform einer Vorrichtung 20 für das erfindungsgemäße Verfahren in einem Kraftfahrzeug 14. Die Vorrichtung 20 ist für die Ausführungsform des erfindungsgemäßen Verfahrens verwendbar, wobei zum Beispiel verschiedene Abtastraten auf die Abstandssensoren mittels der Steuereinrichtung 15 und des Multiplexers16 geschaltet werden können. Somit wird eine besonders große Flexibilität erreicht.

An der Vorderseite des Kraftfahrzeugs 14 sind zum Beispiel sechs vordere Abstandssensoren V1 bis V6 angeordnet, von denen zwei Abstandssensoren V1 und V6 jeweils zur Seite, das heißt quer zur Fahrtrichtung 19, weisen, wobei die anderen Abstandssensoren in Fahrtrichtung 19 ausgerichtet sind.

An der Rückseite des Kraftfahrzeugs 14 sind zum Beispiel auch sechs hintere Abstandssensoren H1 bis H6 angeordnet, von denen auch zwei Abstandssensoren H1 und H6 jeweils zur Seite weisen, das heißt quer zur Fahrtrichtung 19, wobei die anderen Abstandssensoren gegen die Fahrtrichtung 19 ausgerichtet sind.

Die vorderen in Fahrtrichtung 19 weisenden Abstandssensoren V2 bis V5, der vordere seitlich nach rechts ausgerichtete Abstandssensor V1 und der hintere seitlich nach rechts ausgerichtete Abstandssensor H1 sind gemeinsam mit einem ersten Anschluss 17 eines Multiplexers 16 der Steuereinrichtung 15 verbunden. Ebenso sind die hinteren gegen die Fahrtrichtung 19 weisenden Abstandssensoren H2 bis H5, der hintere seitlich nach links ausgerichtete Abstandssensor H6 und der vordere seitlich nach links ausgerichtete Abstandssensor V6 sind gemeinsam mit einem zweiten Anschluss 18 des Multiplexers 16 der Steuereinrichtung 15 verbunden.

Mit dieser Ausgestaltung wird sichergestellt, dass die mit einer ersten Abtastrate betriebenen vorderen seitlichen Abstandssensoren V1 und V6 gleichzeitig mit den mit einer zweiten Abtastrate betriebenen hinteren seitlichen Abstandssensoren H1 und H6 jeweils für die gleiche Seite auf Senden/Empfangen geschaltet werden können.

Die Vorrichtung 20 weist weiterhin die schon oben beschriebenen Einrichtung 21 zum Messen und die Einrichtung 22 zum Erzeugen von Abtastraten auf. Diese werden jeweils von der Steuereinrichtung 15 in bekannter und weiter nicht beschriebener Weise in dem erfindungsgemäßen Verfahren entsprechend verwendet und gesteuert.

Der Multiplexer 16 und die Einrichtungen 21 und 22 können Bestandteil der Steuereinrichtung 15 sein und zum Teil oder ganz separat angeordnet sein. Weiterhin kann die Steuereinrichtung 15 einen zusätzlichen nicht dargestellten Speicher zum Speichern von vorgebbaren Werten für bestimmte Bereiche oder dergleichen aufweisen.

Die Erfindung ist nicht auf die oben beschriebenen Ausführungsbeispiele beschränkt, sondern auf vielfältige Art und Weise modifizierbar.

So ist es beispielsweise denkbar, dass die ersten und zweiten Abtastbereiche 10, 11 weitere Informationen über die Beschaffenheit der Parklücke 3 wie beispielsweise des Fahrbahnbodens, des Bordsteins und dergleichen liefern.

Ebenfalls sind außer Ultraschallverfahren alle Echoverfahren, wie beispielsweise RADAR, LIDAR und dergleichen anwendbar.

Weiterhin ist eine Minimalversion zum Vermessen einer Parklücke für ein Einparkassistenzsystem denkbar, die zum Beispiel nur aus einem vorderen linken und rechten Abstandssensor bzw. nur aus jeweils zwei seitlich ausgerichteten Abstandssensoren besteht.

Die Anordnung von einem oder mehreren Abstandssensoren an der Seite eines Fahrzeugs ist unabhängig von Anbauort auf der jeweiligen Seite. Je nach Echoverfahren sind jedoch bestimmte Abstände untereinander zwecks Störungsminderung einzuhalten.

Die Anordnung von zwei Abstandssensoren innerhalb eines Gehäuses ist ebenfalls denkbar, wobei diese beispielsweise unterschiedliche Trägerfrequenzen bzw. Einrichtungen aufweisen, die eine gegenseitige Störung verhindern.

Auch die Kombination von unterschiedlichen Echoverfahren ist hierbei denkbar.

## Patentansprüche

1. Verfahren zum Vermessen einer Parklücke (3) für ein Einparkassistenzsystem eines Kraftfahrzeugs (14) mit mindestens einem ersten Abstandssensor (V1...6; H1...6) und einer Steuereinrichtung (15), mit folgenden Verfahrensschritten:
(S1) Abtasten einer ersten Eckenbegrenzung (12) mit dem ersten Abstandssensor (V1, V6, H1, H6) mit einer ersten Abtastrate zur Ermittlung des Anfangs einer Parklücke (3);
(S2) Messen der Länge (L) der Parklücke (3);
(S3) Messen der Tiefe (T) der Parklücke (3) mit dem ersten Abstandssensor (V1, V6, H1, H6) mit einer zweiten Abtastrate;
(S4) Abtasten einer zweiten Eckenbegrenzung (13) als Ende der Parklücke (3) mit dem Abstandssensor (V1, V6, H1, H6);
(S5) Beenden des Messens der Länge (L) und der Tiefe (T) der Parklücke (3); und
(S6) Übergabe der Vermessungswerte für die Länge (L) und Tiefe (T) der Parklücke (3) an das Einparkassistenzsystem.

2. Verfahren nach Anspruch 1,
**dadurch gekennzeichnet,**
**dass** der Verfahrensschritt (S2) Messen der Länge (L) die folgenden Teilschritte aufweist:
(S2a) Betreiben des Abstandssensors (V1, V6, H1, H6) mit der ersten Abtastrate;
(S2b) Beenden des Verfahrensschritts (S2) bei Abtasten eines Objektes innerhalb eines vorgebbaren Bereiches und Verzweigen zu Verfahrensschritt (S1); oder
(S2c) Verzweigen zu Verfahrensschritt (S3) bei Überschreiten des vorgebbaren Bereiches, ohne dass ein Objekt abgetastet wurde.

3. Verfahren nach Anspruch 1 oder 2,
**dadurch gekennzeichnet,**
**dass** beim Verfahrensschritt (S4) Abtasten einer zweiten Eckenbegrenzung (13) der Abstandssensor (V1, V6, H1, H6) wieder mit der ersten Abtastrate betrieben wird.

4. Verfahren nach einem der Ansprüche 1 bis 3,
**dadurch gekennzeichnet,**
**dass** das Messen der Länge (L) der Parklücke (3) mit einer Einrichtung (21) zum Messen des Fahrwegs des Kraftfahrzeugs erfolgt, welche im Kraftfahrzeug vorhandene Sensoren und/oder Messwerte verwendet, oder mit einem Sensor ausgerüstet ist, der Messwerte für den Fahrweg des Kraftfahrzeugs liefert.

5. Verfahren nach einem der Ansprüche 1 bis 4,
**dadurch gekennzeichnet,**
**dass** die erste und zweite Abtastrate von einer Einrichtung zum Erzeugen von Abtastraten erzeugt wird.

6. Verfahren nach einem der Ansprüche 1 bis 5,
**dadurch gekennzeichnet,**
**dass** die erste Abtastrate höher ist als die zweite Abtastrate, und ein dazugehöriger erster Abtastbereich (10) eine kleinere Reichweite aufweist als ein zu der zweiten Abtastrate zugehöriger zweiter Abtastbereich (11).

## Claims

1. Method for measuring a parking space (3) for a parking assistance system of a motor vehicle (14) comprising at least one first distance sensor (V1...6; H1...6) and a control device (15), comprising the following method steps:
(S1) scanning a first corner boundary (12) by means of the first distance sensor (V1, V6, H1, H6) with a first scanning rate for determining the start of a parking space (3);
(S2) measuring the length (L) of the parking space (3);
(S3) measuring the depth (T) of the parking space (3) by means of the first distance sensor (V1, V6, H1, H6) with a second scanning rate;
(S4) scanning a second corner boundary (13) as the end of the parking space (3) by means of the distance sensor (V1, V6, H1, H6);
(S5) ending the measurement of the length (L) and the depth (T) of the parking space (3); and
(S6) transferring the measurement values for the length (L) and depth (T) of the parking space (3) to the parking assistance system.

2. Method according to Claim 1,
**characterized**
**in that** method step (S2) measuring the length (L) has the following substeps:
(S2a) operating the distance sensor (V1, V6, H1, H6) with the first scanning rate;
(S2b) ending method step (S2) upon scanning an object within a predeterminable region and branching to method step (S1); or
(S2c) branching to method step (S3) upon exceeding the predeterminable region without an object having been scanned.

3. Method according to Claim 1 or 2,
**characterized**
**in that** in method step (S4) scanning a second corner boundary (13), the distance sensor (V1, V6, H1, H6) is operated with the first scanning rate again.

4. Method according to any of Claims 1 to 3,
**characterized**
**in that** the length (L) of the parking space (3) is measured by means of a device (21) for measuring the travel path of the motor vehicle, which uses measured values and/or sensors present in the motor vehicle or is equipped with a sensor that supplies measured values for the travel path of the motor vehicle.

5. Method according to any of Claims 1 to 4,
**characterized**
**in that** the first and second scanning rates are generated by a device for generating scanning rates.

6. Method according to any of Claims 1 to 5,
**characterized**
**in that** the first scanning rate is higher than the second scanning rate, and an associated first scanning region (10) has a smaller range than a second scanning region (11) associated with the second scanning rate.

## Revendications

1. Procédé pour mesurer un emplacement de stationnement (3) par un système d'assistance au stationnement d'un véhicule automobile (14) ayant au moins un capteur de distance (V....6 ; H1...6) ainsi qu'une installation de commande (15) et comprenant les étapes de procédé suivantes :
(S1) détection d'une première limite de coin (12) avec un premier capteur de distance (V1, V6, H1, H6), selon un premier taux de détection pour déterminer le début d'un emplacement de stationnement (3) ;
(S2) mesurer la longueur (L) de l'emplacement de stationnement (3) ;
(S3) mesurer la profondeur (T) de l'emplacement de stationnement (3) avec le premier capteur de distance (V1, V6, H1, H6) selon un second taux de détection ;
(S4) détection d'une seconde limite de coin (13) comme extrémité de l'emplacement de stationnement (3) avec un capteur de distance (V1, V6, H1, H6) ;
(S5) terminer la mesure de la longueur (L) et la profondeur (T) de l'emplacement de stationnement (3) ; et
(S6) transfert des valeurs de mesure pour la longueur (L) et la profondeur (T) de l'emplacement de stationnement (3) au système d'assistance de stationnement.

2. Procédé selon la revendication 1,
**caractérisé en ce que**
l'étape de procédé (S2) consistant à mesurer la longueur (L) comprend les étapes partielles suivantes :
(S2a) gestion du capteur de distance (V1, V6, H1, H6) avec le premier taux de détection ;
(S2b) terminer l'étape de procédé (S2) par la détection d'un objet dans une plage prédéfinie et dérivation vers l'étape de procédé (S1), ou
(S2c) dériver vers l'étape de procédé (S3) si l'on dépasse la plage prédéfinie sans qu'un objet n'ait été détecté.

3. Procédé selon l'une quelconque des revendications 1 ou 2,
**caractérisé en ce que**
dans l'étape de procédé (S4) qui consiste à détecter une seconde limitation de coin (13), le capteur de distance (V1, V6, H1, H6) fonctionne de nouveau avec le premier taux de détection.

4. Procédé selon l'une quelconque des revendications 1 à 3,
**caractérisé en ce que**
la mesure de la longueur (L) de l'emplacement de stationnement (3) se fait avec une installation (21) pour mesurer le trajet parcouru par le véhicule automobile, utilisant les capteurs et/ou les valeurs de mesure existant dans le véhicule automobile, ou équipée d'un capteur qui fournit les valeurs de mesure pour le trajet parcouru par le véhicule automobile.

5. Procédé selon l'une quelconque des revendications 1 à 4,
**caractérisé en ce qu'**
on génère le premier et le second taux de détection à partir d'une installation générant des taux de détection.

6. Procédé selon l'une quelconque des revendications 1 à 5,
**caractérisé en ce que**
le premier taux de détection est supérieur au second taux de détection et une première plage de détection (10) correspondante a une portée plus faible qu'une seconde plage de détection (11) associée au second taux de détection.
